# EUROPEAN PATENT APPLICATION

(11) **EP 4 657 338 A1**
(43) Date of publication of application: **03.12.2025**
(21) Application number: 25179491.3
(22) Date of filing: 28.05.2025
(51) Int. Cl.: G06N 20/00, G06V 10/82, G06V 30/19, G06Q 10/20

(54) **METHOD AND APPARATUS FOR CONSTRUCTING INTELLIGENT VISIUAL MONITORING AND MAINTENANCE SYSTEM, AND INTELLIGENT VISIUAL MONITORING AND MAINTENANCE SYSTEM**

(30) Priority: 28.05.2024 CN 202410674584
(71) Applicant: Tsinghua University, Beijing 100084 (CN)
(72) Inventor: LI, Yan-Fu, Beijing 100084 (CN); WANG, Huan, Beijing 100084 (CN)
(74) Representative: advotec.

(57) **Abstract**

A method for constructing an intelligent visual monitoring and maintenance system including: optimizing a predefined image-text understanding model using a two-stage fine-tuning strategy according to visual monitoring information of a target field, to obtain a target field image-text understanding model, the two-stage fine-tuning strategy including first-stage contrastive learning and second-stage low-rank adaptation; constructing an operation and maintenance decision-making system based on a target field knowledge base and a large language model; and constructing an intelligent visual monitoring and maintenance system for the target field based on the target field image-text understanding model and the operation and maintenance decision-making system. The present invention achieves robustness understanding of the visual image, and empowers the large language model with the target field knowledge base. Accordingly, the large language model can master the technical knowledge and the operation and maintenance decision-making information of the target field, and intelligently generate the suggestion.

## Description

### CROSS-REFERENCE TO RELATED APPLICATIONS

This Application claims the benefit of priority to Chinese Patent Application No. 2024106745844, filed on May 28, 2024.

### TECHNICAL FIELD

The present disclosure relates to the field of intelligent visual monitoring and operation and maintenance, and in particular, to a method and an apparatus for constructing an intelligent visual monitoring and maintenance system, and an intelligent visual monitoring and maintenance system.

### BACKGROUND

At present, visual monitoring has become an indispensable part of operation and maintenance systems in various fields. With the promotion and application of deep learning, visual-monitoring-based deep learning is also playing an important role in various fields. However, the current deep learning model for visual monitoring can only informs an engineer whether there is a defect and a type of defect based on a visual monitoring image. It is difficult to make a reasonable explanation for a cause of the defect, and it is also impossible to provide a reliable solution and an operation and maintenance decision-making suggestion. In addition, the current deep learning model for visual monitoring is difficult to generalize to unknown scenarios, and the performance is not good in the increasingly complex and dynamically changing production environment. Therefore, it is difficult to ensure production safety and production quality.

In the past one or two years, various large language models (LLMs) have made revolutionary breakthroughs in the fields of natural language processing and image analysis, demonstrating powerful multi-tasking capabilities, generalization capabilities for unknown situations, logical reasoning capabilities for dealing with complex problems, and the ability to conduct human-computer dialogues with humans. In order to improve production efficiency and reduce production costs, LLM-based production and operation have become an urgent need in various production fields. However, training corpuses of the existing large language models come from the open Internet, which greatly limits the depth of their knowledge acquisition. It is difficult for the existing large language models to learn and acquire technical knowledge in a specific field, because there are a large number of confidential technical documents, operation and maintenance manuals, equipment monitoring data, etc. in various fields. Therefore, when dealing with a technical problem and a task in the specific field, the large language models fail to understand relevant concepts and technical details, which leads to many difficulties in the actual production field, such as misunderstandings in the content of the replies, inaccurate or irrelevant information, etc.

### SUMMARY

The present invention provides a method, apparatus and system for constructing an intelligent visual monitoring and maintenance system, which realizes a robust understanding of a visual image. A target field knowledge base empowers a large language model, so that the large language model can master the technical knowledge of the target field and operation and maintenance decision information, and then can intelligently generate an operation and maintenance decision-making suggestion based on the visual image, which can ensure the safety and reliability of the equipment and improve the intelligence level and operation and maintenance efficiency.

On a first aspect, the embodiments of the present invention provide a method for constructing an intelligent visual monitoring and maintenance system. The method includes:
optimizing a predefined image-text understanding model using a two-stage fine-tuning strategy according to visual monitoring information of a target field, to obtain a target field image-text understanding model, in which the two-stage fine-tuning strategy includes first-stage contrastive learning and second-stage low-rank adaptation;
constructing an operation and maintenance decision-making system based on a target field knowledge base and a large language model; and
constructing an intelligent visual monitoring and maintenance system for the target field based on the target field image-text understanding model and the operation and maintenance decision-making system.

On a second aspect, the embodiments of the present invention also provide an apparatus for constructing an intelligent visual monitoring and maintenance system. The apparatus includes: a processor and a memory. The memory is configured to store a program for constructing the intelligent visual monitoring and maintenance system. The processor is configured to read the program for constructing the intelligent visual monitoring and maintenance system, and perform the method for constructing the intelligent visual monitoring and maintenance system as described in the above embodiments.

On a third aspect, the embodiments of the present invention further provide an intelligent visual monitoring and maintenance system. The system includes: a target field image-text understanding model and an operation and maintenance decision-making system.

The operation and maintenance decision-making system includes a prompt template, a large language model, a text vector similarity calculation model, a prompt information generation module and a text embedding model.

The prompt template is configured to store a correspondence relationship between text information of a target field and a text vector, the text information is generated based on the target field knowledge base processed by the apparatus for constructing the intelligent visual monitoring and maintenance system as described in the above embodiments, and the text vector is generated by encoding the text information by the text embedding model.

The large language model includes a human-computer interaction interface, a reasoning module and a decision-making module. The human-computer interaction interface is configured to obtain a target image of the target field and output an operation and maintenance decision-making suggestion; the reasoning module is configured to perform reasoning calculation according to prompt information and generate reasoning information; the decision-making module is configured to integrate the reasoning information and generate the operation and maintenance decision-making suggestion.

The target field image-text understanding model is configured to preprocess the target image, generate a standardized input image, and convert the standardized input image into consultation text information.

The text embedding model is configured to encode the text information of the target field into the text vector and encode the consultation text information into a consultation vector.

The text vector similarity calculation model is configured to calculate a similarity between the consultation vector and the text vector, and obtain similar text information from the prompt template based on the similarity calculation result;

The prompt information generation module is configured to splice the similar text information and the consultation text information to generate the prompt information.

Compared with related art, the method, apparatus and system for constructing an intelligent visual monitoring and maintenance system in the embodiments of the present invention achieve robust understanding of the visual image by constructing the image-text understanding model suitable for the target field, convert the visual image into the accurate text information, and empower the large language model with the target field knowledge base. Accordingly, the large language model can master the technical knowledge and the operation and maintenance decision-making information of the target field, and then intelligently generate the accurate and effective operation and maintenance decision-making suggestion based on the visual monitoring information of the target field. It can adapt to the complex operating environment of the target field, meet the operation and maintenance requirements of the target field, reduce the burden on staff, and can promptly discover actual problems of the product or the equipment, reduce maintenance costs, ensure the safety and reliability of the equipment, and improve the intelligence level and the operation and maintenance efficiency of the target field.

Other features and advantages of the present invention will be set forth in the following description, and in part will become apparent from the description, or may be understood by practicing the present invention. Other advantages of the present invention can be realized and obtained through the solutions described in the description and the drawings.

### BRIEF DESCRIPTION OF THE DRAWINGS

The accompanying drawings are used to provide an understanding of the technical solution of the present invention and constitute a part of the specification. Together with the embodiments of the present invention, they are used to explain the technical solution of the present invention and do not constitute a limitation on the technical solution of the present invention.
FIG. 1 is a flow chart of a method for constructing an intelligent visual monitoring and maintenance system according to the embodiments of the present invention.
FIG. 2a is a schematic diagram of a single defect type of a wafer in some embodiments of the present invention.
FIG. 2b is a schematic diagram of a mixed defect type of a wafer in some embodiments of the present invention.
FIG. 3 is a flow chart of generating an operation and maintenance decision-making suggestion according to the embodiments of the present invention.
FIG. 4 is a schematic diagram of an apparatus for constructing an intelligent visual monitoring and maintenance system according to the embodiments of the present invention.
FIG. 5 is a schematic diagram of an intelligent visual monitoring and maintenance system according to the embodiments of the present invention.

### DETAILED DESCRIPTION

The present invention describes multiple embodiments, but the description is exemplary rather than restrictive, and it is obvious to a person skilled in the art that there may be more embodiments and implementations within the scope of the embodiments described in the present invention. Although many possible combinations of features are shown in the drawings and discussed in the detailed description, many other combinations of the disclosed features are possible. Any feature or element of any embodiment may be used in combination with or replace any other feature or element in any other embodiment, unless specifically limited otherwise.

The present invention includes and contemplates combinations of features and elements known to those of ordinary skill in the art. The embodiments, features, and elements that have been disclosed in the present invention may also be combined with any conventional features or elements to form a unique inventive solution as defined by the claims. Any feature or element of any embodiment may also be combined with a feature or element from other inventive solutions to form another unique inventive solution as defined by the claims. Therefore, it should be appreciated that any feature shown and/or discussed in the present invention may be implemented individually or in any appropriate combination. Furthermore, various modifications and changes may be made to the solutions without extending beyond the scope of protection of the appended claims.

Furthermore, in describing representative embodiments, the description may have presented the methods and/or processes as a particular sequence of steps. However, to the extent that the methods or processes do not rely on the specific order of steps described in the description, the methods or processes should not be limited to the specific order of steps described. As will be appreciated by one of ordinary skill in the art, other sequences of steps are possible.

At present, visual monitoring is widely used in various production fields. For example, it can be used to conduct quality inspection on products produced, and can timely discover product defects, improve the yield rate, reduce recall costs, and improve production efficiency. It can also be used to inspect a production equipment, and can timely discover equipment failures or abnormalities, so that an enterprise can maintain the production equipment in a timely manner, improve the safety and reliability of the production equipment, and ensure smooth production. With the increasing complexity of production in various walks of life, it is necessary to timely analyze large quantities of visual monitoring images and provide professional solutions and operation and maintenance suggestions based on the analysis results. Relying solely on manual solutions and operation and maintenance suggestions has seriously restricted the improvement of production efficiency. The emergence of large language models provides a possibility to solve this problem, but the current large language models have limited training corpuses and it is difficult to provide professional and reliable operation and maintenance solutions. Therefore, how to combine visual monitoring with the large language models and provide targeted and highly adaptable operation and maintenance decision-making suggestions for various production fields has become an urgent problem to be solved.

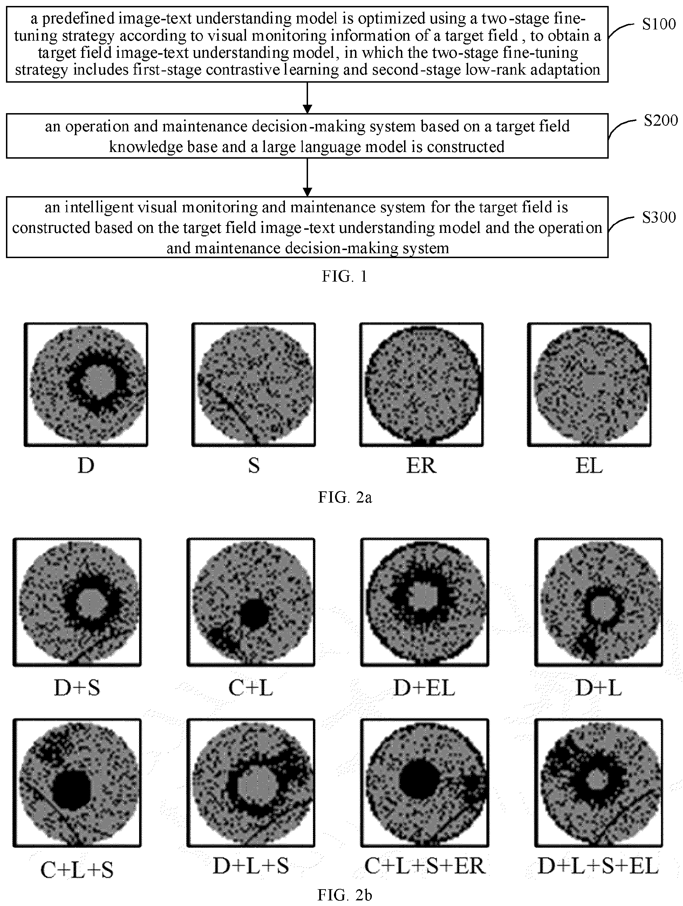

The embodiments of the present invention provide a method for constructing an intelligent visual monitoring and maintenance system, including S100-S300, as shown in FIG. 1.

At S100, a predefined image-text understanding model is optimized using a two-stage fine-tuning strategy according to visual monitoring information of a target field, to obtain a target field image-text understanding model, in which the two-stage fine-tuning strategy includes first-stage contrastive learning and second-stage low-rank adaptation.

At S200, an operation and maintenance decision-making system based on a target field knowledge base and a large language model is constructed.

At S300, an intelligent visual monitoring and maintenance system for the target field is constructed based on the target field image-text understanding model and the operation and maintenance decision-making system.

In these embodiments, the target field may be various industrial fields, such as semiconductor manufacturing, automobile manufacturing, power production and transmission, aerospace and military industry, and petrochemical industry; or it may be a transportation field, such as railway transportation, airport operation and maintenance; or it may also be an infrastructure field, such as highway, bridge, tunnel construction and building construction, etc. The above fields are only exemplary descriptions of the target fields and are not intended to limit the target fields of application of the present invention, and will not be described in detail in the description.

In these embodiments, the predefined image-text understanding model in step S100 may select an existing model, and target field visual monitoring information is used as training data to perform two-stage training and optimization on the predefined image-text understanding model. The two-stage fine-tuning strategy includes first-stage contrastive learning and low-rank adaptation (LoRA for short) in a second-stage. After these two stages of optimization, the information from the target field is effectively embedded in the predefined image-text understanding model, so that the image-text understanding model can achieve robust understanding of the target field image, thereby improving the adaptability of the image-text understanding model to the actual scenes of the target field.

In some embodiments, the large language model (LLM for short) may select existing commercial large language models, such as ChatGPT, Skywork large model, etc. Since training corpuses of the large language models mostly come from the Internet and lacks proprietary knowledge in a specific target field, the operation and maintenance decision-making system constructed by step S200 uses the target field knowledge base to empower the large language model, thereby bridging a knowledge gap between the large language model and a professional engineer in the target field.

In these embodiments, the intelligent visual monitoring and maintenance system (IVMMS) for the target field in step S300 includes two parts: the target field image-text understanding model and the operation and maintenance decision-making system. These two parts can realize intelligent interaction and generate the corresponding operation and maintenance decision-making suggestion based on the understanding of the image by the target field image-text understanding model. The IVMMS can be applied to prognostics and health management (PHM) in the target field.

The method for constructing an intelligent visual monitoring and maintenance system in these embodiments achieves robust understanding of the visual image by constructing the image-text understanding model suitable for the target field, converts the visual image into the accurate text information, and empowers the large language model with the target field knowledge base. Accordingly, the large language model can master the technical knowledge and the operation and maintenance decision-making information of the target field, and then intelligently generate the accurate and effective operation and maintenance decision-making suggestion based on the visual monitoring information of the target field. It can adapt to the complex operating environment of the target field, meet the operation and maintenance requirements of the target field, reduce the burden on staff, and can promptly discover actual problems of the product or the equipment, reduce maintenance costs, ensure the safety and reliability of the equipment, and improve the intelligence level and the operation and maintenance efficiency of the target field.

In some example embodiments, the target field visual monitoring information includes a multimodal image-text dataset and an enhanced image-text dataset.

The multimodal image-text dataset is obtained by: obtaining images of the target field, the images being collected by a visual sensor installed on a device in the target field; preprocessing the images of the target field to obtain standardized images; obtaining a calibration text of each of the standardized images to generate the multimodal image-text dataset.

The enhanced image-text dataset is obtained by: randomly enhancing each of the standardized images in the multimodal image-text dataset to obtain a corresponding enhanced image, and taking the corresponding relationship between the enhanced images and the calibrated texts as the enhanced image-text dataset.

The calibration text includes a defect type, a defect type concept and a defect cause.

In these embodiments, the visual sensor may be selected based on a monitoring requirement of the target field. For example, a high-speed linear array visual sensor may be installed on a production line to obtain images of products on a conveyor belt; an infrared visual sensor may be installed on a power production and transportation equipment to obtain non-contact temperature images; a black and white CMOS image sensor may be installed on a semiconductor wafer manufacturing equipment to obtain black and white images that are convenient for identifying a wafer defect, such as wafer images obtained on the wafer manufacturing production line as shown in Figs. 2a and 2b. Fig. 2a is a schematic diagram of a single defect type of a wafer, and Fig. 2b is a schematic diagram of a mixed defect type of a wafer. D, S, ER, EL, C, and L in Figs. 2a and 2b represent different wafer defect types, respectively, in which D represents a donut defect (grains form a circle), S represents a scratch defect, ER (Edge Ring) represents that grains form a ring at the edge of the wafer, and EL (Edge Localized) represents that there are grains aggregated on part of the edge of the wafer, C (Center) represents that grains are accumulated in the center of the wafer, and L (Localized) represents that grains are distributed only in a part of the wafer. The above is an exemplary description and does not serve as a limitation to the visual sensor of the present invention, and will not be described in detail herein.

In these embodiments, the image in the target field is preprocessed, which may include converting various types of images into RGB format, cropping and scaling the image size, and standardizing the image. The preprocessed image can meet a format requirement of the image-text understanding model for the input image, so as to more accurately generate text description for the input image.

In these embodiments, for the image in the target field, the calibration text may be generated by an engineer with rich experience in the target field; or the image in the target field may be input into the large language model to generate the calibration text; or the calibration text may be generated by combining the rich experience of the engineer and the large language model. For example, in the field of wafer defect identification, the wafer image and hard instructions "what is the defect in this wafer map?" are input into a human-computer interaction interface of the large language model. The large language model may recognize the image and output the calibration text, for example, the output defect type is "Donut", the defect type concept is "The defective dies form a ring structure in this wafer map", and the defect cause is "which may be caused by inaccurate chemical mechanical polishing".

In these embodiments, by randomly enhancing the standardized image, data expansion of the visual monitoring information can be achieved, and more training samples can be generated, which helps to improve the generalization ability and robustness of the image-text understanding model and reduce over-fitting.

In some example embodiments, step S100 may include steps S110-S120.

At S110, the standardized image and the enhanced image are used as training data for the predefined image-text understanding model, performing first-stage contrastive learning, and generating a trained first-stage optimization model.

At S120, the multimodal image-text dataset and the enhanced image-text dataset are used as training data for the first-stage optimization model, the second-stage low-rank adaptation is performed, a trained second-stage optimization model is generated, and the second-stage optimization model is used as the target field image-text understanding model.

In these embodiments, the contrastive learning training in the first-stage may be based only on the image, and is a self-supervised learning method. By comparing features of image samples extracted by the predefined image-text understanding model, similar image samples are brought closer and dissimilar image samples are moved away. A feature representation of the image samples in the target field is learned, thereby improving the predefined image-text understanding model's understanding of the visual surveillance information in the target field.

In these embodiments, the training data for the second-stage low-rank adaptation training may include image-text pair data in the multimodal image-text dataset and the enhanced image-text dataset, and the model optimized in the first-stage is further fine-tuned in a supervised training manner, aiming to enhance the ability of the image-text understanding model to intelligently convert the image into the text description. Through these two stages of training, the knowledge of the target field is embedded in the predefined image-text understanding model, and the target field image-text understanding model obtained by the two-stage training is more in line with the understanding and analysis requirements of image analysis in the target field.

In some example embodiments, step S110 may include steps S111-S114.

At S111, the predefined image-text understanding model is loaded as a current contrastive learning model for first-stage iterative training in a first time.

The following steps are executed in a loop to perform the first-stage iterative training until a contrastive representation loss is less than or equal to a first predefined loss threshold, and the trained first-stage optimization model is obtained:

At S112, a positive and negative sample pair is constructed using a predetermined strategy based on the standardized image and the enhanced image, and the positive and negative sample pair is input into the current contrastive learning model for feature extraction, to obtain feature vectors corresponding to the positive and negative sample pair;

At S113, similarity calculation is performed on the two image samples in the positive and negative sample pair based on the feature vectors, and a contrastive representation loss is calculated according to the similarity calculation result and a first loss function; and

At S114, a relationship between the contrastive representation loss and a first predefined loss threshold is determined, and when the contrastive representation loss is greater than the first predefined loss threshold, a first predefined optimizer is used to update a parameter in the current contrastive learning model.

In these embodiments, the similarity calculation in step S113 may, for each positive and negative sample pair, use cosine similarity to calculate the similarity of the feature vectors corresponding to the two image samples in the positive and negative sample pair, and the separate contrastive representation loss of the positive and negative sample pair is calculated according to the similarity calculation result and the first loss function, and then contrastive representation losses of all positive and negative sample pairs are calculated according to the separate contrastive representation losses corresponding to all positive and negative sample pairs. The first loss function may use Contrastive Loss, N-Pairs Loss, InfoNCE Loss, etc.

In some example embodiments, step S120 may include steps S121-S123.

At S121, low-rank decomposition is performed on a weight matrix W of the first-stage optimization model, and *W* is decomposed into *W*₀ and Δ*W*;

*W = W*₀ *+* Δ*W = W*₀ *+ BA, W*₀ is not updated during the training process, *B* is initialized by a zero initialization method, *A* is initialized by a random Gaussian initialization method, *B* and *A* are used as parameters that need to be updated in the first-stage optimization model, where *W* ∈ 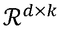 , *W₀* ∈ 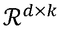 , *B* ∈ 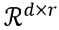 , *A* ∈ 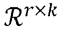 , and r << min(*d*, *k*), the first-stage optimization model is used as a current image-text model for second-stage iterative training for a first time;

The following steps are executed in a loop to perform the second-stage iterative training on *B* and *A* until a low-rank adaptation loss is less than or equal to a second predefined loss threshold, and the trained *B* and *A* are obtained to generate the trained second-stage optimization model:

At S122, the multimodal image-text dataset and the enhanced image-text dataset are input into the current image-text model, and the low-rank adaptation loss is calculated according to a second loss function;

At S123, a relationship between the low-rank adaptation loss and the second predefined loss threshold is determined. When the low-rank adaptation loss is greater than the second predefined loss threshold, a second predefined optimizer is used to update *B* and *A,* and an updated current image-text model is obtained based on the updated *B* and *A.*

In these embodiments, *W* is decomposed into *W*₀ and Δ*W*. During the training process, *W*₀ is frozen and does not accept gradient updates. *B* is initialized by the zero initialization method to ensure that *ΔW= BA =* 0 in an initial state, thereby ensuring that *W = W*₀ in the initial state. Since r << min(*d*, *k*) and the rank of the matrix is limited by its dimensional size and cannot exceed a smaller value of the number of rows and columns. That is, the ranks of matrices *B* and *A* may be much smaller than the rank of *W. W* being low-rank decomposed into *W*₀ and Δ*W* provides a data basis for the low-rank adaptation training.

In these embodiments, during the training process, *B* and *A* are two learnable parameters, and the low-rank adaptive training optimizes and updates *B* and *A.* Based on the updated *B* and *A,* the updated weight matrix *W* can be obtained, thereby realizing the optimization and update of the first-stage optimization model, and obtaining the target field image-text understanding model. Therefore, low-rank adaptive training can achieve the understanding of the target field image-text pair through a small amount of parameter updates, thereby meeting the specific analysis requirements of the target field.

In some example embodiments, step S200 may include steps S210-S250.

At S210, a relevant document of the target field is obtained, and the target field knowledge base is constructed based on the relevant document.

At S220, the relevant document in the target field knowledge base is parsed and processed, and the parsed result and the processing result are used as text information of the target field.

At S230, a pre-trained text embedding model is used to encode the text information respectively to generate a corresponding text vector.

At S240, a correspondence relationship between the text information and the text vector is saved as a prompt template of the target field.

At S250, a linking tool is started, and the prompt template, the large language model, a pre-trained text vector similarity calculation model, a prompt information generation module and the text embedding model are respectively transmitted to a first node, a second node, a third node, a fourth node and a fifth node of the linking tool, and the first node, the second node, the third node, the fourth node and the fifth node are combined based on a first predetermined linking strategy to generate the operation and maintenance decision-making system.

In these embodiments, the target field knowledge base in step S210 may include technical documents, equipment manuals, operating guides, maintenance and repair guides, practical experience, etc. in the target field, especially relevant technical information that is confidential in the target field and cannot be obtained from the Internet. The information is knowledge that the large language model corpus does not have. The update frequency and maintenance strategy of the target field knowledge base may be set, including regularly updating data in the target field knowledge base, cleaning up obsolete information, correcting errors, etc., and continuously optimizing and improving the content of the target field knowledge base to adapt to changes and developments in the target field.

In these embodiments, the parsing and processing of the relevant document in the target field knowledge base in step S220 may be completed by the apparatus for constructing an intelligent visual monitoring and maintenance system. Specifically, the parsing and processing may include semantic splitting, splitting the relevant document into text information, and the text information obtained by splitting is convenient for vectorized encoding of the text embedding model. The method used for semantic splitting may select a specific semantic splitting algorithm suitable for the target field, so that the split text information not only includes the type and cause of the defect or fault, but also includes a corresponding solution and a maintenance suggestion.

In these embodiments, through step S230, the text embedding model can encode the high-dimensional text information into the low-dimensional text vector. The text embedding model aims to capture the semantic features and grammatical features of the text information, vectorize the text information, and summarize the semantic and contextual features of the text information. This process may use cutting-edge pre-training models, such as Bidirectional Encoder Representations from Transformers (BERT) to achieve more accurate and expressive text information encoding.

In these embodiments, through step S240, the correspondence relationship between the text information and the text vector is saved as the prompt template of the target field, providing a data basis for obtaining similar text information based on the text vector similarity calculation result.

In these embodiments, based on the pre-trained text vector similarity calculation model, a text vector similar to a consultation vector may be obtained from the prompt template, in which the consultation vector is obtained from the target image input by a user. Specifically, when the amount of vector data is small, the text vector similarity calculation may be calculated using cosine similarity or Euclidean distance; when the amount of vector data is very large, the similarity calculation by using the cosine similarity or the Euclidean distance will result in a huge time overhead, and a Facebook AI Similarity Search (FAISS) may be introduced to achieve billion-level vector similarity retrieval. The FAISS supports multiple similarity calculation methods, such as inverted index and product quantization. These two methods are the main calculation methods for the FAISS to achieve fast reading, low memory overhead, and accurate similarity calculation.

In these embodiments, the prompt information generation module may be constructed based on prompt engineering, and may splice the similar text information obtained by the text vector similarity calculation model and consultation text information. The consultation text information is obtained from the target image input by the user, and the obtained prompt information may be used as input data of the large language model, to obtain the operation and maintenance decision-making suggestion. In addition, the prompt information generation module may also be designed in a targeted manner according to the actual scenarios of the target field, so as to generate prompt information that is easy to be parsed by the large language model.

In these embodiments, the linking tool of step S250 may select the large language open source tool library Langchain, which is committed to realizing a common interface for various large language models, "linking" related components together, and simplifying the development difficulty of large language models. The operation and maintenance decision-making system formed by the link integrates the prompt template obtained based on the target field knowledge base and the large language model, so that the large language model may understand the technical knowledge and operating specifications of the target field, thereby generating a more reasonable operation and maintenance decision-making suggestion that meet the characteristics of the target field.

In these embodiments, the operation and maintenance decision-making system can automatically provide the engineer with the operation and maintenance decision-making suggestion. By continuously enriching and maintaining the content of the target field knowledge base, the large language model based on the target field knowledge base can continuously optimize and improve the benefits of the vision-based target field operation and maintenance system, and promote the intelligence and automation of the operation and maintenance system based on visual monitoring.

In some example embodiments, step S300 may include step S310.

At S310, the target field image-text understanding model is transmitted to a sixth node of the linking tool, the sixth node is combined with the operation and maintenance decision-making system based on a second predetermined linking strategy, and the intelligent visual monitoring and maintenance system for the target field is generated.

In these embodiments, similarly, the linking tool may select the large language open source tool library Langchain to link the target field image-text understanding model trained by the two-stage fine-tuning strategy and the operation and maintenance decision-making system generated in step S250, to generate the intelligent visual monitoring and maintenance system (IVMMS) of the target field. Based on IVMMS, the whole process of understanding the target field image, image-text dialogue, generating operation and maintenance decision-making suggestion, and information interaction is automated and intelligentized.

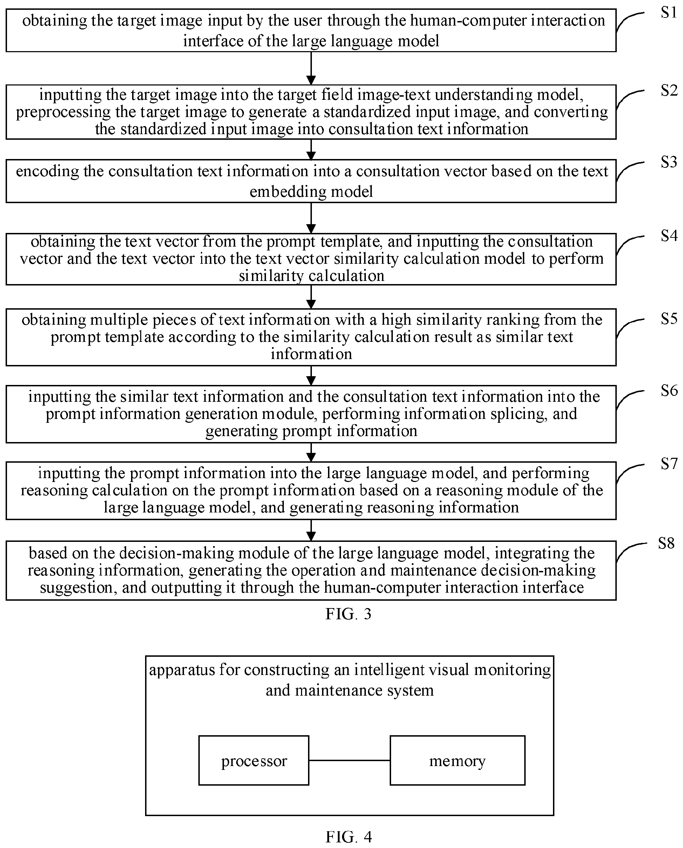

In some example embodiments, the intelligent visual monitoring and maintenance system (IVMMS) is configured to generate an operation and maintenance decision-making suggestion based on a target image of the target field. The generating of the operation and maintenance decision-making suggestion includes steps S1-S8, as shown in FIG. 3:
S1: obtaining the target image input by the user through the human-computer interaction interface of the large language model;
S2: inputting the target image into the target field image-text understanding model, preprocessing the target image to generate a standardized input image, and converting the standardized input image into consultation text information;
S3: encoding the consultation text information into a consultation vector based on the text embedding model;
S4: obtaining the text vector from the prompt template, and inputting the consultation vector and the text vector into the text vector similarity calculation model to perform similarity calculation;
S5: obtaining multiple pieces of text information with a high similarity ranking from the prompt template according to the similarity calculation result as similar text information;
S6: inputting the similar text information and the consultation text information into the prompt information generation module, performing information splicing, and generating prompt information;
S7: inputting the prompt information into the large language model, and performing reasoning calculation on the prompt information based on a reasoning module of the large language model, and generating reasoning information; and
S8: based on the decision-making module of the large language model, integrating the reasoning information, generating the operation and maintenance decision-making suggestion, and outputting it through the human-computer interaction interface.

In these embodiments, based on the prompt information, steps S7 and S8 can enable the large language model to make reasoning and decision that meet the requirements of the target field. The prompt information integrates the similar text information in the target field and the consultation text information, and can guide the large language model to generate more accurate and more suitable operation and maintenance decision-making suggestion output for the target field.

The embodiments of the present invention also provide an apparatus for constructing an intelligent visual monitoring and maintenance system, including: a processor and a memory, as shown in FIG. 4.

The memory is configured to store a program for constructing the intelligent visual monitoring and maintenance system.

The processor is configured to read the program for constructing the intelligent visual monitoring and maintenance system and perform the method for constructing the intelligent visual monitoring and maintenance system as described in the above embodiments.

In these embodiment, the processor of the apparatus for constructing an intelligent visual monitoring and maintenance system may use an NVIDIA A100 graphics processor unit (GPU), and the memory may use 80GB of video memory, which can meet the requirements of the intelligent visual monitoring and maintenance system construction of the above-mentioned embodiments.

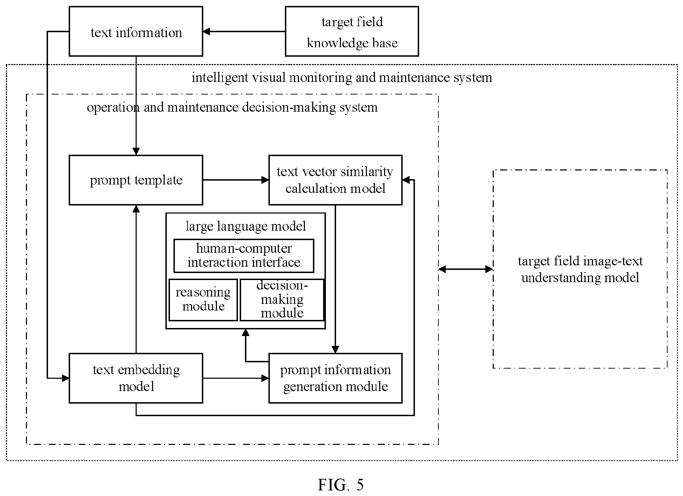

The embodiments of the present invention also provide an intelligent visual monitoring and maintenance system. The system includes: a target field image-text understanding model and an operation and maintenance decision-making system, as shown in FIG. 5.

The operation and maintenance decision-making system includes a prompt template, a large language model, a text vector similarity calculation model, a prompt information generation module and a text embedding model.

The prompt template is configured to store a correspondence relationship between text information of a target field and a text vector, the text information is generated based on a target field knowledge base processed by the apparatus for constructing the intelligent visual monitoring and maintenance system as described in the above embodiments, and the text vector is generated by encoding the text information by the text embedding model.

The large language model includes a human-computer interaction interface, a reasoning module and a decision-making module. The human-computer interaction interface is configured to obtain a target image of the target field and output an operation and maintenance decision-making suggestion; the reasoning module is configured to perform reasoning calculation according to prompt information and generate reasoning information; the decision-making module is configured to integrate the reasoning information and generate the operation and maintenance decision-making suggestion.

The target field image-text understanding model is configured to preprocess the target image, generate a standardized input image, and convert the standardized input image into consultation text information.

The text embedding model is configured to encode the text information of the target field into the text vector and encode the consultation text information into a consultation vector.

The text vector similarity calculation model is configured to calculate a similarity between the consultation vector and the text vector, and obtain similar text information from the prompt template based on the similarity calculation result.

The prompt information generation module is configured to splice the similar text information and the consultation text information to generate the prompt information.

To further illustrate the technical effects of the present invention, a specific example is used below to describe in detail the application effect of the above-mentioned intelligent visual monitoring and maintenance system in the field of wafer manufacturing.

The wafer manufacturing is a key process in the semiconductor industry, which is a basis for a production of integrated circuits and other semiconductor components. By promptly detecting and handling defects on the wafer, a scrap rate and a remanufacturing cost can be reduced, thereby reducing overall production costs. In this example, an intelligent visual monitoring and maintenance system (IVMMS-1) is constructed based on the method for constructing the intelligent visual monitoring and maintenance system of the above-mentioned embodiments. The IVMMS-1 includes an image-text understanding model MODEL-1 in the field of wafer defect detection and an operation and maintenance decision-making system. The operation and maintenance decision-making system includes a prompt template constructed based on a knowledge base in the field of wafer defect detection, a text vector similarity calculation model, a text embedding model, a prompt information generation module and a large language model CHATGPT.

In order to quantitatively evaluate the effect of MODEL-1 constructed by the present invention, Table 1 shows the defect recognition performance of MODEL-1 and the other seven models. The defect type recognition accuracy of MODEL-1 reaches 99.11%, which is significantly higher than the defect type recognition accuracy of the other seven models, and MODEL-1 has the function of qualitatively analyzing and describing the wafer visual monitoring image. For example, the image marked with "D+S" in Fig. 2b is used as the input image of MODEL-1, that is, the image is used as the target image of IVMMS-1, MODEL-1 will output the following consultation text information: "Donut+Scratch, the defective dies are formed a ring structure and also distributed in a long narrow area on the wafer map, the Donut may be caused by inaccurate chemical mechanical polishing, the Scratch may be caused by mechanical and foreign body injury". The information includes the defect type, defect type concept and defect cause, while the other seven models can only output the defect type and cannot provide more detailed information.

**Table 1, Comparison of defect type recognition accuracy:**

| | | | | |
|---|---|---|---|---|
| Model | MODEL-1 | VGG-19 | ResNet-50 | DenseNet |
| Accuracy | 99.11% | 97.72% | 97.44% | 98.61% |
| Model | ViT | Swin-Trans | Swin-Trans V2 | ConvNeXt |
| Accuracy | 98.17% | 97.06% | 97.17% | 98.56% |

The consultation text information output by the above MODEL-1 is input into the text embedding model to generate the corresponding consultation vector. The text vector of the wafer defect detection field is obtained from the prompt template. The consultation vector and the text vector are input into the text vector similarity calculation model for similarity calculation to obtain the similarity vector. The corresponding text information of the wafer defect detection field is obtained from the prompt template based on the similarity vector. The text information and the consultation text information are input into the prompt information generation module for information splicing to generate the prompt information, and the prompt information is input into CHATGPT. CHATGPT will perform reasoning calculation based on the prompt information and output the corresponding operation and maintenance decision-making suggestion. The suggestion includes how to calibrate wafer manufacturing equipment, how to adjust process parameters, a process flow, or a frequency of cleaning foreign matter in production equipment and environment, a training suggestion for employees, introduction of a new coating or material, etc.

It can be seen from this example that the intelligent visual monitoring and maintenance system constructed in the present invention has very good accuracy and generalization ability. It is suitable for visual monitoring image data processing and analysis in a specific field, and improves the adaptability of the existing large language model to the specific field. It can provide production and operation guidance to a certain extent and has huge application potential.

Those skilled in the art will appreciate that all or some of the steps in the methods disclosed above, and the functional modules/units in the systems and apparatuses may be implemented as software, firmware, hardware, or their suitable combination. In a hardware implementation, the division between functional modules/units mentioned in the above description does not necessarily correspond to the division of physical components. For example, one physical component may have multiple functions, or one function or step may be performed by several physical components in cooperation. Some or all components may be implemented as software executed by a processor, such as a digital signal processor or a microprocessor, or as hardware, or as an integrated circuit, such as an application specific integrated circuit. Such software may be distributed on computer-readable medium, which may include a computer storage medium (or a non-transitory medium) and a communication medium (or a transitory medium). As is known to those skilled in the art, the term "computer storage medium" includes a transitory, non-transitory, erasable and un-erasable medium implemented in any method or technology for storage of information, such as computer readable instructions, data structures, program modules or other data. The computer storage medium includes, but is not limited to, an RAM, an ROM, an EEPROM, a flash memory or other memory technology, a CD-ROM, a digital versatile disk (DVD) or other optical disk storage, a magnetic cassette, a magnetic tape, a magnetic disk storage or other magnetic storage apparatuses, or any other medium that can be configured to store the desired information and which can be accessed by a computer. Furthermore, it is well known to those skilled in the art that the communication medium typically includes computer readable instructions, a data structures, a program module, or other data in a modulated data signal such as a carrier wave or other transmission mechanism, and may include any information delivery medium.

## Claims

1. A method for constructing an intelligent visual monitoring and maintenance system, comprising:
optimizing a predefined image-text understanding model using a two-stage fine-tuning strategy according to visual monitoring information of a target field, to obtain a target field image-text understanding model, wherein the two-stage fine-tuning strategy comprises first-stage contrastive learning and second-stage low-rank adaptation (S100);
constructing an operation and maintenance decision-making system based on a target field knowledge base and a large language model (S200); and
constructing an intelligent visual monitoring and maintenance system for the target field based on the target field image-text understanding model and the operation and maintenance decision-making system (S300).

2. The method according to claim 1, wherein
the target field visual monitoring information includes a multimodal image-text dataset and an enhanced image-text dataset;
the multimodal image-text dataset is obtained by: obtaining images of the target field, the images being collected by a visual sensor installed on a device in the target field; preprocessing the images of the target field to obtain standardized images; obtaining a calibration text of each of the standardized images to generate the multimodal image-text dataset; and
the enhanced image-text dataset is obtained by: randomly enhancing each of the standardized images in the multimodal image-text dataset to obtain corresponding enhanced images, and taking the corresponding relationship between the enhanced images and the calibrated text as the enhanced image-text dataset.

3. The method according to claim 2, wherein the calibration text comprises a defect type, a defect type concept and a defect cause.

4. The method according to claim 2 or 3, wherein optimizing the predefined image-text understanding model using the two-stage fine-tuning strategy according to the visual monitoring information of the target field to obtain the target field image-text understanding model, comprises:
using the standardized image and the enhanced image as training data for the predefined image-text understanding model, performing the first-stage contrastive learning, and generating a trained first-stage optimization model;
using the multimodal image-text dataset and the enhanced image-text dataset as training data for the first-stage optimization model, performing the second-stage low-rank adaptation to generate a trained second-stage optimization model, and using the second-stage optimization model as the target field image-text understanding model.

5. The method according to claim 4, wherein using the standardized image and the enhanced image as the training data for the predefined image-text understanding model, performing the first-stage contrastive learning, and generating the trained first-stage optimization model, comprises:
loading the predefined image-text understanding model as a current contrastive learning model for first-stage iterative training in a first time; and
executing following steps in a loop to perform the first-stage iterative training until a contrastive representation loss is less than or equal to a first predefined loss threshold, and obtaining the trained first-stage optimization model, the steps comprising:
constructing a positive and negative sample pair using a predetermined strategy based on the standardized image and the enhanced image, and inputting the positive and negative sample pair into the current contrastive learning model for feature extraction, to obtain feature vectors corresponding to the positive and negative sample pair;
performing similarity calculation on the two image samples in the positive and negative sample pair based on the feature vectors, and calculating a contrastive representation loss according to the similarity calculation result and a first loss function; and
determining a relationship between the contrastive representation loss and a first predefined loss threshold, and when the contrastive representation loss is greater than the first predefined loss threshold, using a first predefined optimizer to update a parameter in the current contrastive learning model.

6. The method according to claim 4 or 5, wherein using the multimodal image-text dataset and the enhanced image-text dataset as the training data for the first-stage optimization model, performing the second-stage low-rank adaptation to generate the trained second-stage optimization model comprises:
performing low-rank decomposition on a weight matrix *W* of the first-stage optimization model, and decomposing *W* into *W*₀ andΔ*W*, wherein *W = W*₀ *+* Δ*W = W*₀ *+ BA, W*₀ is not updated during the training process, *B* is initialized by a zero initialization method, *A* is initialized by a random Gaussian initialization method, *B* and *A* are used as parameters that need to be updated in the first-stage optimization model, where *W* ∈ 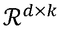 , *W₀* ∈ 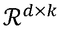 , *B* ∈ 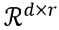 , *A* ∈ 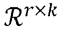 , and r « min(*d*, *k*)*,* the first-stage optimization model is used as a current image-text model for second-stage iterative training for a first time; and
executing following steps in a loop to perform the second-stage iterative training on *B* and *A* until a low-rank adaptation loss is less than or equal to a second predefined loss threshold, and obtaining the trained *B* and *A* to generate the trained second-stage optimization model, the steps comprising:
inputting the multimodal image-text dataset and the enhanced image-text dataset into the current image-text model, and calculating the low-rank adaptation loss according to a second loss function; and
determine a relationship between the low-rank adaptation loss and the second predefined loss threshold, and when the low-rank adaptation loss is greater than the second predefined loss threshold, using a second predefined optimizer to update *B* and *A,* and obtaining an updated current image-text model based on the updated *B* and *A.*

7. The method according to any one of claims 1 to 6, wherein constructing the operation and maintenance decision-making system based on the target field knowledge base and the large language model comprises:
obtaining a relevant document of the target field and constructing the target field knowledge base based on the relevant document;
parsing and processing the relevant document in the target field knowledge base, and using the parsing result and processing result as text information of the target field;
using a pre-trained text embedding model to encode the text information to generate a corresponding text vector;
saving a correspondence relationship between the text information and the text vector as a prompt template of the target field; and
starting a linking tool, and transmitting the prompt template, the large language model, a pre-trained text vector similarity calculation model, a prompt information generation module and the text embedding model to a first node, a second node, a third node, a fourth node and a fifth node of the linking tool respectively, and combining the first node, the second node, the third node, the fourth node and the fifth node based on a first predetermined linking strategy to generate the operation and maintenance decision-making system.

8. The method according to claim 7, wherein constructing the intelligent visual monitoring and maintenance system for the target field based on the target field image-text understanding model and the operation and maintenance decision-making system comprises:
transmitting the target field image-text understanding model to a sixth node of the linking tool, combining the sixth node with the operation and maintenance decision-making system based on a second predetermined linking strategy, and generating the intelligent visual monitoring and maintenance system for the target field.

9. The method according to claim 8, wherein
the intelligent visual monitoring and maintenance system is configured to generate an operation and maintenance decision-making suggestions based on a target image of the target field.

10. The method according to claim 9, wherein generating the operation and maintenance decision-making suggestion comprises:
obtaining the target image input by a user through a human-computer interaction interface of the large language model (S1);
inputting the target image into the target field image-text understanding model, preprocessing the target image to generate a standardized input image, and converting the standardized input image into consultation text information (S2);
encoding the consultation text information into a consultation vector based on the text embedding model (S3);
obtaining the text vector from the prompt template, and inputting the consultation vector and the text vector into the text vector similarity calculation model to perform similarity calculation (S4);
obtaining multiple pieces of text information with a high similarity ranking from the prompt template according to the similarity calculation result as similar text information (S5);
inputting the similar text information and the consultation text information into the prompt information generation module, perform information splicing, and generating prompt information (S6);
inputting the prompt information into the large language model, and performing reasoning calculation on the prompt information based on a reasoning module of the large language model, and generating reasoning information (S7); and
based on the decision-making module of the large language model, integrating the reasoning information, generating the operation and maintenance decision-making suggestion, and outputting the suggestion through the human-computer interaction interface (S8).

11. An apparatus for constructing an intelligent visual monitoring and maintenance system, comprising: a processor and a memory; wherein
the memory is configured to store a program for constructing the intelligent visual monitoring and maintenance system; and
the processor is configured to read the program for constructing the intelligent visual monitoring and maintenance system and perform the method for constructing the intelligent visual monitoring and maintenance system according to any one of claims 1-10.

12. An intelligent visual monitoring and maintenance system, comprising: a target field image-text understanding model and an operation and maintenance decision-making system; wherein
the operation and maintenance decision-making system comprises a prompt template, a large language model, a text vector similarity calculation model, a prompt information generation module and a text embedding model;
the prompt template is configured to store a correspondence relationship between text information of a target field and a text vector, the text information is generated based on a target field knowledge base processed by the apparatus for constructing the intelligent visual monitoring and maintenance system according to claim 9, and the text vector is generated by encoding the text information by the text embedding model;
the large language model comprises a human-computer interaction interface, a reasoning module and a decision-making module; the human-computer interaction interface being configured to obtain a target image of the target field and output an operation and maintenance decision-making suggestion; the reasoning module being used to perform reasoning calculation according to prompt information and generate reasoning information; the decision-making module being configured to integrate the reasoning information and generate the operation and maintenance decision-making suggestion;
the target field image-text understanding model is configured to preprocess the target image, generate a standardized input image, and convert the standardized input image into consultation text information;
the text embedding model is configured to encode the text information of the target field into the text vector and encode the consultation text information into a consultation vector;
the text vector similarity calculation model is configured to calculate a similarity between the consultation vector and the text vector, and obtain similar text information from the prompt template based on the similarity calculation result; and
the prompt information generation module is configured to splice the similar text information and the consultation text information to generate the prompt information.
